# EUROPEAN PATENT APPLICATION

(11) **EP 4 455 815 A1**
(43) Date of publication of application: **30.10.2024**
(21) Application number: 23170083.2
(22) Date of filing: 26.04.2023
(51) Int. Cl.: G05B 19/418, B60L 13/03, B65G 54/02, H02K 41/03, B60L 15/00

(54) **METHOD FOR CONTROLLING A TRANSPORT SYSTEM**

(71) Applicant: Siemens Aktiengesellschaft, 80333 München (DE)
(72) Inventor: BISCHOFF, Martin, 85653 Großhelfendorf (DE); CRAMER, Christian, 90559 Burgthann-Ezelsdorf (DE); SAMPER ESCUDERO, José Luis, 155 00 Praha (CZ); KÖRWER, Niklas, 51065 Köln (DE)
(74) Representative: Siemens Patent Attorneys

(57) **Abstract**

A method for controlling a transport system (1) is provided, the transport system (1) comprising at least one linear and/or planar motor (10) with a stator (20) and at least one mover (30) and a controller (40) for automatically controlling the movement of the at least one mover (30) relative to the stator (20),
- wherein the method comprises the following steps:
a) providing a thermal model (MOD) for the transport system (1),
b) determining a movement plan (MP) for the at least one mover (30) according to a predefined movement task (TSK), wherein a simulation of a temperature distribution (DIST) within the at least one linear and/or planar motor (10) during the movement is carried out based on the thermal model (MOD),
such that a movement plan (MP) is derived for which at least one predefined temperature limit (LIM) is respected within the simulation, and
c) executing the determined movement plan (MP) on the transport system (1) by means of the controller (40).

Furthermore, a computer program product, a controller and a transport system for carrying out the method are provided.

## Description

The present invention relates to a method for controlling a transport system, the transport system comprising at least one linear and/or planar motor with a stator and at least one mover and a controller for automatically controlling the movement of the at least one mover relative to the stator. The invention further relates to a computer program product, a controller for carrying out the method and a transport system with such a controller.

Industrial manufacturing lines often use automated transport systems for transporting work pieces and other materials within the manufacturing process. Such transport systems are often based on classical conveyor belts, driven by rotating machines. Recently, alternative drive concepts with linear or planar motors have increasingly been used in such transport systems, for example the transport systems marketed under the term Multi-Carrier-System (MCS). Here the transported elements are being transported by carriers, where the individual carriers are part of the respective linear or planar motor. There can in particular be more than one such motor in the transport system. A transport system of this type allows a very precise control of the movement of each carrier, in particular allowing the movement of neighboring carriers with strongly differing speed. When the carriers correspond to the movers of a linear or planar motor, a much higher throughput of transported elements and also a higher positioning accuracy can often be achieved compared to conventional conveyor belts.

In one possible configuration of such a transport system, an array of electromagnetic windings is integrated in the rail or plate which forms the stator of the motor. Correspondingly, the individual movers are equipped with permanent magnets which interact with the varying electromagnetic fields that are formed when the stator windings are energized with variable AC or DC currents. One challenge in the operation of such a transport system is that the motor and in particular the stator windings have a tendency to overheat when a lot of energy is dissipated in a relatively small section of the stator. This can for example occur when a mover is held over a fixed position of the stator against a relatively high external force for an extended period of time. Alternatively, overheating can easily occur when several movers are sequentially accelerated and/or decelerated over the same stator section without allowing enough time for cooling down the respective stator windings in between the acceleration or deceleration steps. The resulting overheating of the stator windings can easily lead to a thermal damage of the windings, the housing or other integral parts of the motor. Even if an immediate damage is avoided, such thermal stress often leads to premature aging of the motor components. In order to avoid such thermal damage, transport systems of this type are often operated with very conservative operational limits which means that the full potential in terms of material throughput, flexibility of movement control, achievable holding force, total energy consumption and/or overall system's efficiency is often not exploited.

It is therefore a goal of the present invention to provide a method for controlling such a transport system which supports the reduction of thermal stress during operation, in particular while allowing the transport system to operate at a high throughput, high flexibility of movement control and/or high overall system's efficiency.

These objects of the invention are achieved by claim 1 with respect to the controlling method, by claim 13 with respect to a computer program product, by claim 14 with respect to a controller, and by claim 15 with respect to a transport system.

The method according to the invention is a method for controlling a transport system. This transport system comprises at least one linear and/or planar motor with at least one stator and at least one mover and a controller for automatically controlling the movement of the at least one mover relative to the at least one stator. The method comprises the following steps:
a) providing a thermal model for the transport system,
b) determining a movement plan for the at least one mover according to a predefined movement task,
   wherein a simulation of a temperature distribution within the at least one linear and/or planar motor during the movement is carried out based on the thermal model,
   such that a movement plan is derived for which at least one predefined temperature limit is respected within the simulation, and
c) executing the determined movement plan on the transport system by means of the controller.

Linear or planar motors are types of machines well known in the art. In contrast to rotating machines, they comprise one or more movers which perform a translational motion relative to the stator when the motor is in action. In a linear motor the stator can particularly assume the shape of a rail or rail segment and the mover(s) can be moved by linear force along this rail, along a straight and/or curved path. A planar motor is also often referred to as a Sawyer motor. Here the stator can particularly assume the shape of a flat base element and the mover(s) can be moved within a two-dimensional plane on the surface of the stator. Both motor types allow a rather flexible control of the movement of the individual movers within the respective path and/or plane. When such a mover is configured to serve as a carrier for a transported element, a transport system with high throughput, high flexibility and high positioning accuracy can be realized.

The motion of the mover(s) relative to the stator(s) is performed automatically and controlled by a controller. Within the method, a movement plan for the at least one mover is determined according to a predefined movement task. This task can particularly comprise starting positions and target positions of the individual mover(s), optional intermediate positions to be assumed that certain predetermined times, target velocities and/or a target throughput of material to be transported by the transport system. In other words, the movement task corresponds to the task of transporting the mover(s) by translational motion and fulfilling certain boundary conditions during this movement. The movement task does not have to include a fixed trajectory for the individual mover(s). Instead, there will usually be a choice between a number of trajectories of the individual mover(s) that can serve to fulfill the predefined movement task. The derived movement plan then contains the detailed information on how the respective mover(s) are to be moved within the next time horizon, in other words the respective trajectory or trajectories of the at least one mover. In addition to the trajectories of the respective mover(s), the movement plan can optionally comprise information on how the motor(s) should be driven in order to achieve this movement.

The determination of the movement plan in step b) can in particular be carried out by a motion planner module which is integrated in the controller. The essential idea of the present invention is that when the movement plan is determined, a thermal simulation of the consequences of executing the movement plan is also being carried out within the same overall step. This simulation uses the thermal model provided within step a) of the method. It yields a predicted temperature distribution within the at least one motor when the movement according to the movement plan is carried out. In particular, a predicted temporal and spatial distribution of the temperature during the movement and across the motor(s) is provided. This simulated temperature distribution can in particular be used to verify if a candidate movement plan proposed by the motion planner module is expected to be compatible with one or more predefined temperature limits. Only if at least one such predefined temperature limit is respected within the simulation of the candidate movement plan, this candidate can become the actual movement plan which is determined in step b) and executed in step c).

In other words a verification of the movement plan based on a thermal simulation is taking place during the operation of the transport system. The temperature distribution is therefore not just being simulated beforehand in order to derive operational limits of the motor(s). Instead, the thermal simulation is integrated into the controlling procedure and it is an integral part of determining the movement plan within step b). Particularly, the thermal simulation can be carried out between the proposal of a candidate movement plan by the motion planner module and executing the actual movement plan (as verified by the simulation) within step c). Advantageously, the thermal simulation step can be carried out a plurality of times. For example, several thermal simulations can be carried out within one step b) in order to arrive at a first verification and/or in order to make a selection between several verified movement plans. Additionally or alternatively, several thermal simulations can also be carried out when a plurality of actual movement plans are being determined and executed on the transport system.

An important advantage of the method according to the present invention is that the thermal simulation which is carried out online during the operation of the transport system helps to ensure that the thermal damage threshold of the motor(s) is not exceeded during operation. This way, less conservative motor settings can be used compared to conventional operation methods, where the operational limits of the motor(s) are derived from thermal simulations which take place before the actual operation of the transport system. Verifying the proposed movement plans during the operation of the system brings the advantage of a much higher flexibility, because many individual movement plans can be allowed on the basis of a very specific thermal simulation which otherwise would have to be rejected for safety reasons, if only a prior, general thermal consideration of the motor parameters is used. To name a specific example, a temporary very high acceleration of a mover over a certain rail section within the proposed movement plan could be tolerated, if not much heat is dissipated within the same rail section during the other phases of the movement plan. A more general restriction of motor parameters might prohibit this high acceleration, but a thermal simulation of the whole individual movement plan may lead to the conclusion that the thermal boundary conditions can safely be met. Such an individual thermal verification of each proposed movement plan can lead to a much more flexible exploitation of the potential of the transport system while at the same time assuring that thermal damage is safely avoided. Overall, the resulting higher flexibility in the choice of movement plans can lead to a higher performance of the transport system combined with a longer lifetime. The commissioning of such a transport system can also be faster, as the verification of the thermal safety is being performed continuously during the operation. This way fewer resources need to be used in the commissioning phase in order to derive conservative overall operational limits for the motor(s).

The challenge of the method according to the present invention is that the online simulation of the temperature distribution may use a lot of computational resources, especially when such a simulation is used to verify each movement plan that is eventually executed within step c). However, the computational effort can be significantly reduced by features of some of the favorable embodiments so that the proposed simulation becomes feasible during the operation of the transport system.

Besides the above method, the invention refers to a computer program product with program code, which is stored in machine-readable form on a medium, for carrying out a method according to the invention or one or more preferred embodiments of the invention when the program code is executed on a computer. Furthermore, the invention refers to a controller for controlling the movement in a transport system, the transport system comprising at least one linear and/or planar motor with a stator and at least one mover, wherein the controller is configured to carry out the method according to the invention or one or more preferred embodiments of the invention. Furthermore, the invention refers to a transport system, the transport system comprising at least one linear and/or planar motor with at least one stator and at least one mover and a controller for automatically controlling the movement of the at least one mover relative to the at least one stator, wherein the controller is configured to carry out the method according to the invention. The transport system can in particular be a transport system for an industrial manufacturing line. The advantages of the computer program product, the controller, and the transport system correspond to the advantages described above for the method according to the invention.

Advantageous configurations and embodiments of the method according to the invention follow from the claims dependent on claim 1 as well as the following description. The advantageous features of the method, the computer program product and the controller can generally be interchanged and combined.

According to a generally preferred embodiment, steps b) and c) are each carried out several times, such that a plurality of consecutive movement plans is determined and executed, wherein during the determination of each movement plan, at least one simulation of the temperature distribution within the linear and/or planar motor(s) is carried out. In particular, each determination of the movement plan in step b) can be followed by an execution of this determined movement plan in step c). In other words the thermal simulation within step b) is carried out many times in order to verify each movement plan before it is executed within step c). In this context, a "verification" of a movement plan is generally understood to be a confirmation that at least one predefined temperature limit is respected during the execution of the movement plan within the simulation.

In a particularly favorable variant of this embodiment, the simulation of each following movement plans (or the respective candidates) uses the temperature distribution obtained for the immediately preceding movement plan as input parameter. In other words, the thermal simulations for the consecutive movement plans build on one another.

According to a further generally preferred embodiment for step b), one or more candidates for the movement plan are first generated, and then a verification and/or selection of one such candidate is carried out based on the simulation. Thereby a movement plan for use in step c) is determined.

For example, a first candidate for the movement plan can be generated and then a thermal simulation can be performed for this candidate movement plan. If the at least one predefined temperature limit is respected within the simulation, this candidate is verified and the corresponding movement plan can be executed in the following step c). If the first candidate is not verified by the simulation, another candidate can be proposed and the procedure can be repeated until a verified movement plan is obtained for execution in step c).

According to another example, several candidates for the movement plan can be generated and the thermal simulation can be carried out for all those proposed movement plans. Then one or more of these candidates can be verified based on the thermal simulation. A selection between these verified candidates can then take place, where the selection criterion is at least in part based on the result of the thermal simulation. The selected candidate then becomes the movement plan to be executed in step c).

In summary, one or more candidate movement plans can be proposed and at least one verified candidate can be obtained within step b) based on the thermal simulation. In case several verified candidates are identified, a selection between them can be made, leading to the determination of the final movement plan for execution in step c).

Generally, the proposal of the candidate movement plans and the thermal simulation can be carried out either on the same computing device or on separate computing devices. In principle, these operations can be performed within the above-mentioned controller and/or on an additional computing device separate from the controller, for example on an edge device or an industrial PC. Generally, the controller is used to control the execution of the movement plan by controlling the electrical currents through the stator winding(s), but its proposal and/or verification can optionally be performed using a separate computing device.

According to a preferred embodiment for the proposal of the movement plan(s), the one or more candidates for the movement plan can be generated by using a mathematical optimization and/or a heuristic method. For example, an evolutionary algorithm can be used or a random search can be performed in order to propose a candidate movement plan which fulfills the predetermined task such as transporting a number of elements to their respective target positions within a predetermined time. These methods for determining a proposal for a movement plan are well known in the art and they can for example be implemented in a separate motion planner module.

In a preferred embodiment of step a), the thermal model comprises a physical model of the at least one linear and/or planar motor. In other words the thermal model is based on physical properties of the used motor(s). In particular, a lumped heat capacitance model of the motor(s) can be used. Such a lumped-capacitance model reduces a thermal system to a number of discrete "lumps" and assumes that the temperature difference inside each lump is negligible. This approximation immensely reduces the computational effort of the thermal simulation. Alternatively however, more complex physical models such as finite element models can also be used. Or the at least one motor and its environment can be partitioned into somewhat coarser components, depending on the available resources and the required accuracy. It is also not necessary that a physical description of the system is used in the modelling. Alternatively, a purely data-based model can be used for the simulation, for example by using a lookup table or an artificial neural network which has been trained on the basis of measured thermal data. The only essential requirement is that some type of thermal model is available which allows a prediction of a temperature distribution within the motor(s) on the basis of the proposed movement plan and optionally a number of other input parameters representing the state of the motor(s) before the start of this movement plan.

According to a generally preferred embodiment the simulation within step b) uses a temperature correction module. This temperature correction module serves to correct the simulated temperature distribution obtained from the thermal model. In principle, this temperature correction module can be a component of the thermal model provided in step a). For example, a physical model of the motor(s) can be provided and a further component can be contained in this model which accounts for external thermal effects of the environment of the motor(s) such as an ambient temperature, incoming thermal radiation or an increased air circulation due to a nearby cooling fan. Based on considering such external thermal effects, a better prediction of the temperature distribution can be obtained than with the thermal model of the motor(s) by itself without considering the external effects. Alternatively, the temperature correction module can be implemented as a separate computing routine, i.e. as an add-on to the thermal model. In this variant an initial result for the temperature distribution can for example be obtained based on a physical model, and a corrected temperature distribution can then be obtained from a subsequent pass through the temperature correction module. Generally, the physical model and the temperature correction module can be provided on the same computing device. However in principle it is also possible that the temperature correction module is run on a separate computing device from the computing device on which the basic thermal model of step a) is provided.

Particularly favorably, the temperature correction module can be based on at least one artificial neural network. In other words the temperature correction method can make use of artificial intelligence (AI). Such an AI based temperature correction module can help to provide relatively accurate predictions for the temperature distribution during and after a proposed movement plan, even when the thermal model used to obtain a preliminary temperature distribution is relatively simple. Especially when using a combined approach of a relatively simple physics model and a subsequent AI based correction, accurate thermal results can be obtained with relatively low computational effort, thus enabling the simulation of thermal properties online during the operation of the transport system. But also with other (non-AI based) correction models, an improvement of the accuracy of the predicted temperature distribution can be obtained with relatively low effort from the two-step hybrid approach of using a rather simple thermal model and a subsequent correction step.

According to a generally favorable variant of this embodiment, the method can comprise the following step:
d) adapting the temperature correction module based on at least one physical measurement carried out during the operation of the transport system.
This additional step d) can in particular be carried out a plurality of times during the operation of the transport system, for example during and/or in between subsequent executions of several movement plans, when a plurality of steps c) is carried out. This way the temperature correction module can be continuously improved during the operation by using feedback from real physical measurement data. Such a feedback from real data is particularly useful for training an AI based correction module.

According to a first favorable variant, the at least one physical measurement used in step d) can be a temperature measurement and/or a current measurement within the at least one linear and/or planar motor. For example, a temperature can be measured at one or more predetermined positions of the motor(s) during the execution of the movement plan in step c). This measurement can be compared to the predicted temperature at the corresponding time(s), and the difference between the prediction and the measurement can be used to adapt the temperature correction module such that a better prediction is obtained from the next simulation (within the next execution of step b) to verify the next proposed movement plan). In other words the simulation is continuously improved based on real thermal measurements. Alternatively, a temperature of the at least one motor can be derived from a current measurement based on a physical model of the respective motor.

According to a second favorable variant, the at least one physical measurement can be a measurement of an external physical parameter in the environment of the motor(s). Such an external parameter can for example be an ambient temperature, an ambient humidity, a parameter related to the circulation of air and/or other cooling fluids (such as the operation of a fan close to the at least one motor), and/or impinging radiation (such as direct sunlight or other thermal radiation in the region of the at least one motor). Such external parameters can have a significant influence on the real temperature distribution during the execution of a movement plan, but may not be considered in a relatively simple thermal model which only describes the motor(s) but not its surrounding environment. A correction which considers such external influences may therefore contribute significantly to improving the accuracy of the predicted temperature distribution. In general it is also possible and often advantageous to combine the use of one or more temperature measurements within the motor(s) and the measurement of one or more external physical parameters for the continuous adaptation of the temperature correction module.

In those embodiments where the temperature correction module is based on at least one artificial neural network, it is generally preferable that the artificial neural network is trained with data obtained from the operation of the transport system. These data can in particular comprise the at least one physical measurement described above. For example, the one or more physical measurements can be used as training parameters with the method of supervised learning with the training target of minimizing the temperature forecast error. The training of the neural network can in principle take place either during the operation of the system or in between operation phases. In other words, the training can be performed online by using the data as obtained during the operation or the training can be carried out offline with data sets that were obtained during previous operation phases and stored for use in the next training phase. In general, the training can be performed continuously during the operation of the transport system in the sense that a plurality of training phases is spread out over the operation of the transport system, e.g. at regular and/or irregular intervals.

The training of the neural network can in principle be performed either on the same computing device on which the temperature correction module is executed during operation or the training can be performed on a further separate computing device. In the first case, the training can preferably be performed when the transport system is not running, for example at night, on weekends or during other down-times of the system. The training can be performed regularly or triggered by certain events such as a maintenance operation or repairs event.

According to a particularly favorable variant of this embodiment, the artificial neural network is being trained on a computing device separate from the controller. The controller is the computing device by which step c) of the method is executed. Optionally, the simulation within step b) can also be (fully or partially) carried out within the controller. Additionally or alternatively, a separate simulation computing device may be used to carry out the simulation of step b). The simulation can even be performed on two or more computing devices, for example if the basic thermal model and a for the temperature correction module are implemented on different devices. Generally (and independently of the exact implementation of the simulation), the use of a further separate computing device for the training is advantageous because then the training does not occupy computational resources that might be required for the execution of the motion plan in step c) and/or the simulation of the temperature distribution in step b). In particular, this further separate computing device (i.e. the training computing device) is not just separate from the controller but also separate from the simulation computing device(s). The advantage of such a separate training computing device is that the device with a high computational performance can be used which does not necessarily have to be integrated into the other components of the transport system. The training computing device can in particular have access to a large database containing a vast number of training data, for example real operational data (including the above-mentioned physical measurement data) of the currently operated transport system and optionally also for the transport systems that have been previously operated. This way, the operational data from one or more transport systems can be transferred to the training computing device, the training of the neural network can be carried out on this dedicated device, and then the trained neural network can be deployed to the controller and/or a separate simulation computing device. In particular this deployment of updated neural networks can be performed a plurality of times during the operation of the transport system, allowing a continuous adaptation of the temperature correction module to real data.

According to another generally preferred embodiment of step b), the determination of the movement plan can be based on the minimization of a temperature within the at least one linear and/or planar motor and at least one further criterion. In other words, the determination of the movement plan uses a multi-criteria optimization, for example a so-called Pareto optimization. The above-mentioned further criterion can for example be a maximization of the throughput of transported elements through the transport system. Alternative or additional further criteria can be a minimization of energy consumption by the transport system, a minimization of mechanical stress of the components during operation and/or a minimization of (e.g. minimum, maximum and/or average) transport time per transported element. Such a multi-criteria optimization can in particular be useful for making a selection between several candidates movement plans which have been verified by the thermal simulation. In other words, when a selection has to be made between several candidate movement plans which fulfill the hard thermal boundary conditions, it can be useful to consider several criteria in the selection. For example, if several candidate movement plans have been proposed, for which the simulation does not predict prohibitive overheating, the selection of one specific movement plan for execution in step c) can be based on a trade-off between relatively low temperature and relatively high throughput. This means that the choice does not have to fall on the movement plan with the lowest expected thermal stress of our proposed candidates. Instead, a candidate with a somewhat higher temperature distribution may be selected if the achieved material throughput is sufficiently high that the thermal disadvantage can be tolerated.

According to a further generally preferred embodiment, the transport system can comprise one or more movers, wherein each mover functions as a carrier for transported element. In other words, the transported elements are moved "piggy-back" on the respective movers. If a plurality of such movers are used, the transport system is a so-called "Multi-Carrier-System". Such a Multi-Carrier-System allows a very flexible and well defined movement of individual transported elements, especially within a modern industrial manufacturing line. However, it is not necessary that the movers are configured as carriers. Instead the movers themselves can also form the elements to be transported by the transport system.

The transport system can generally comprise a plurality of linear and/or planar motors. In other words, it comprises not just a plurality of movers but also a plurality of stators or stator segments. For example, a linear motor can comprise a linear (straight and/or curved) rail which is composed of several neighboring curvilinear rail segments, wherein each rail segment electrically functions as a stator of a separate linear motor. In combination, the plurality of such stators can effect a precise and controlled movement of a plurality of movers along the transport direction which is determined by the shape of the rail. In this setup, each of the movers can form an individual linear motor with each of the stator segments when the respective mover is located closely enough for an electromagnetic interaction. In a similar fashion, a corresponding plurality of planar motors can be formed by a plurality of tiled, flat stator segments (stator plates), which together form a two-dimensional movement plane for the corresponding movers.

According to a preferred implementation of the motor(s), the stator of the respective linear and/or planar motor comprises a rail segment (for the linear motor) or plate segment (for the planar motor) with a plurality of electromagnetic coils. The at least one mover can comprise at least one permanent magnet per mover. In other words, the stator serves as the primary part and the mover serves as the secondary part of each linear or planar motor. This electromagnetic configuration is particularly advantageous because the stator winding(s) can easily be energized by corresponding electrical circuits within the stationary rail or plate. In contrast, the configuration of the movers can be relatively simple because the permanent magnets do not need to be connected to any power supply. In principle however, it is also possible to choose the opposite configuration such that the mover serves as the primary part and the stator serves as the secondary part of the respective motor.

Further advantages and details of the invention may be found in the exemplary embodiments described below and in the drawings, in which:
- Figure 1: shows a schematic perspective view of a linear motor for a transport system to be controlled according to a first embodiment of the invention,
- Figure 2: shows a schematic sectional view of such a transport system, and
- Figures 3 to 6: show flow diagrams illustrating various aspects of step b) of the method according to different embodiments.

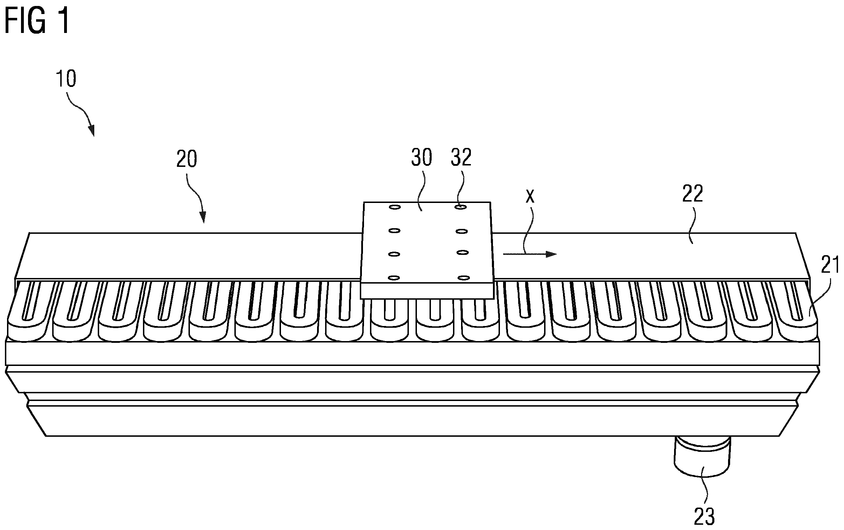

Figure 1 shows a partial perspective view of a linear motor 10 to be used in a transport system according to an embodiment of the invention. This linear motor 10 comprises a stator 20 and at least one mover 30 which can be moved relative to the stator 20 along a transport direction x. The stator 20 has the longitudinal shape of a rail and is the stationary part of the motor 10. The depicted stator 20 can be a part of an extended rail system with several such segments on both sides of the stator 20 of figure 1. The overall rail system can comprise straight and/or curved rail segments such that the movement along the overall transport direction x corresponds to curvilinear movement.

The stator 20 of figure 1 comprises a stator housing 22 and at least one pedestal 23 for mounting the corresponding rail segment within the transport system. Within the stator housing 22 the stator 20 comprises a plurality of electromagnetic windings 21 which form the stator windings of the linear motor 10. The depicted mover 30 comprises one or more permanent magnets (not shown here) which interact with the electromagnetic field of the stator windings when the linear motor 10 is in operation and the stator windings are energized. The mover 30 is then moved along the rail by electromagnetic forces. In particular, the mover 30 can serve as a carrier for one or more transport elements to be transported by the overall transport system. In the example of figure 1, the mover 30 comprises a plurality of mounting holes 32 which can be used for mounting the transported element(s) on top of the carrier. The linear motor 10 can also comprise a plurality of such movers 30.

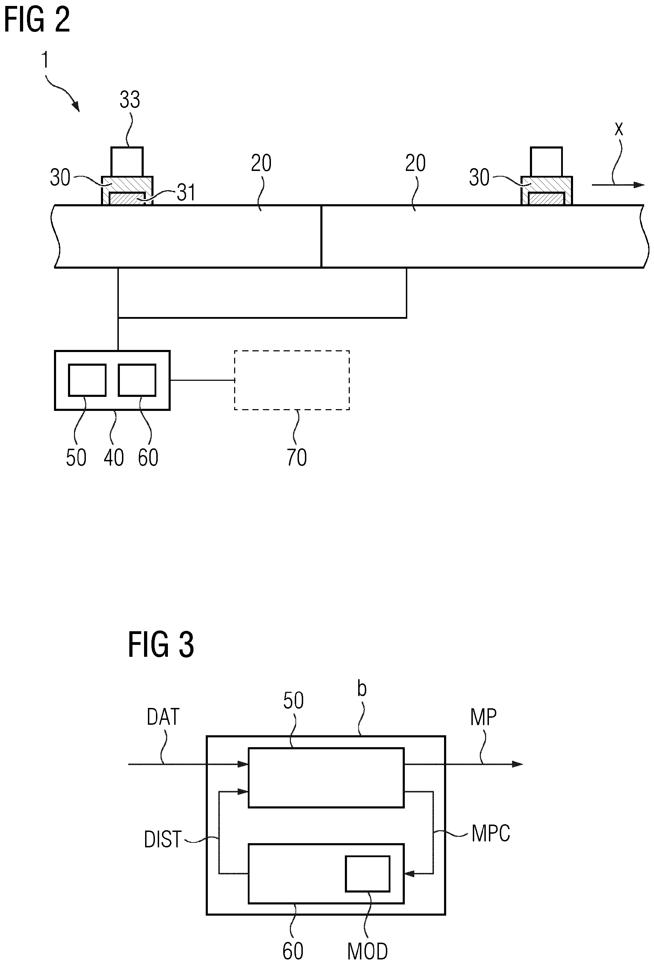

Figure 2 shows a schematic sectional view of a larger part of a similar overall transport system 1 which comprises several such linear motors 10, two of which are shown exemplarily in this figure. In particular, each of these motors comprises a stator 20, each of which forms a rail segment of an overall curvilinear rail system. The stator windings in each stator 20 are not shown here for the sake of simplicity. Two exemplary movers 30 are depicted which can each be moved along the overall transport direction x. However, there is no fixed assignment between the individual movers 30 and the individual stators 20. Instead, a large number of movers 30 can be moved along the overall rail system and each mover forms a linear motor together with the stator on which is currently moving. Each mover carries one or more permanent magnets 31, preferably with a magnetic dipole orientation perpendicular to the surface of the rail. These magnets can for example be magnetic plates integrated at the bottom of each mover. The movers may advantageously be configured such that the type and/or number of magnets can be adjusted depending on operational settings, for example depending on the weight of transported elements 33. In this example, the movers 30 serve as carriers of a Multi-Carrier-System and correspondingly each mover 30 carries a transported element 33. These transported elements 33 can for example be work pieces to be processed in industrial manufacturing line. Alternatively or additionally to the depicted linear motors, the transport system 1 can in principle also comprise one or more planar motors which allow a corresponding motion of the movers along two dimensions within a transport plane. It is also possible that the transport system comprises one or more conventional conveyor belts or other additional transport segments, either at one end or at both ends of the rail formed by the linear motors. The proposed movement plans can then comprise the motion of the mover(s) on those conventional conveyor belts or other transport segments.

The transport system 1 also comprises a controller 40 by which the movement of the individual movers 30 in the transport system 1 can automatically be controlled. Specifically, this controller 40 is the computing device by which a predetermined movement plan MP can be executed. Such a movement plan defines the movement of one or more movers 30 within the transport system 1 for a certain time interval which is also called the time horizon. This time horizon for one movement plan can be of the order of 1 minute, for example in the range between 10 seconds and 10 minutes. During the operation of the overall transport system usually a plurality of subsequent movement plans is executed by the controller 40. In particular, the time horizons of subsequent movement plans can be of the same length. But in principle different lengths of subsequent movement plans are also possible.

Apart from executing one or more predetermined movement plans, the controller 40 can also comprise the functionality of a motion planner unit 50 and a simulation unit 60, as indicated in the figure. Alternatively however, these functionalities can also be implemented in one or more separate computing devices. The motion planner unit 50 serves to propose one or more candidates for a movement plan, in particular in order to fulfill a predetermined movement task. The simulation unit 60 serves to perform thermal simulations and to derive predictions for temperature distributions DIST within the motor(s) 10 during the corresponding movement(s). Both functionalities will be explained in more detail in the context of the following figures. Optionally, the transport system can also comprise a training unit 70 which can in particular serve to train an optional AI based component of the simulation unit 60 (if present). In principle, the training unit 70 can either be implemented in a separate computing device, as indicated in the drawing, or alternatively it can be integrated into the controller 40.

In addition to the central controller 40 which is shown in Figure 2, the transport system 1 can optionally comprise further individual controllers associated with each of the motors in order to control the currents in each of the associated stators 20. These individual controllers are not shown here for the sake of simplicity.

Figure 3 shows a schematic flow diagram illustrating some aspects of the method for controlling such a transport system 1 according to an embodiment of the present invention. In particular, the diagram illustrates some aspects of step b) of the method, wherein a movement plan MP for the one or more movers 30 is determined. In the preceding step a) which is not illustrated here, a thermal model MOD for the transport system 1 is provided which is used within step b). Step b) can for example be carried out within the controller 40.

The determination of the movement plan MP within step b) is based on a set of systems data DAT which is representative of the current status of the transport system 1. This data set DAT for example comprises one or more current temperature values within the motor(s) 10, the current power at which the respective motor 10 is operated, the current power at which an optionally available cooling system is operated, current positions of the individual movers 30, an ambient temperature and/or temperature distribution within the environment of the respective motor, the current time and date and optionally other parameters which are indicative of the current status of the transport system 1.

Using this data set DAT as a basis, a suitable movement plan MP for the next upcoming time horizon is to be determined within step b). In order to achieve this, one or more cycles through the motion planner unit 50 and the simulation unit 60 can be performed as indicated by the loop shown in figure 3. In each pass through the motion planner unit 50 at least one candidate movement plan MPC is proposed. The methods for proposing a movement plan in light of a predefined task of the transport system are well known in the art. For example, a mathematical optimization method and/or a heuristic method can be used to propose a candidate movement plan MPC which fulfills the given task, preferably by optimizing within the available parameter space with respect to one or more criteria.

In a subsequent step, this candidate movement plan MPC is passed to the simulation unit 60 by which a simulated temperature distribution DIST within the respective motor 10 is determined for the candidate movement plan MPC. The simulation itself is at least in part based on the thermal model MOD provided in the preceding step a). The temperature distribution DIST predicted by the simulation is in particular a temporal and spatial distribution. However, it can generally be sufficient that only a subset of this calculated distribution is used for verifying the candidate movement plan MPC and/or for making a selection between several such candidate movement plans MPC. In order to do so, at least a subset of the simulated temperature distribution DIST is passed back to the motion planner unit 50, as indicated by the arrow.

The proposal of a candidate movement plan MPC and the simulation of the corresponding temperature distribution DIST can be repeated several times as indicated by the loop until a suitable MP is determined, for which at least one predefined temperature limit is respected within the simulation. This can in particular be a temperature limit for a region within the respective motor 10. By ensuring that this temperature limit is not exceeded within the simulation model, a movement plan MP can be determined for which the likelihood of thermal damage in the motor(s) is relatively small. This final movement plan MP is then passed on for execution in the transport system within the next time horizon.

Compared to a conventional approach without such an online thermal simulation, less rigid operating specifications for the motor(s) can be used and therefore a higher performance of the transport system can be achieved. Such operating specifications can for example include a maximum power setting, maximum current through the stator winding or maximum holding force. Such operating limits need to be set far more conservatively if the previous history or the next steps within the proposed movement plan are not considered. For example, driving the motor(s) 10 at very high power may well be feasible for a short period of time when one or more movers 30 are moved over sections of the rail where the corresponding stator windings 21 are currently relatively cool, even though the same high power level would not be feasible for a larger period of time and/or for a movement over stator segments that are already warmer from previous operation. And if for example a certain stator segment is operated close to the predetermined temperature limit, the next movement plan for the next time horizon can for example allow a cooling of this specific stator segment by using more power from the neighboring stator segments and/or even shifting some of the acceleration or deceleration tasks to optional conventional conveyor belt sections within the transport system for the necessary period of time.

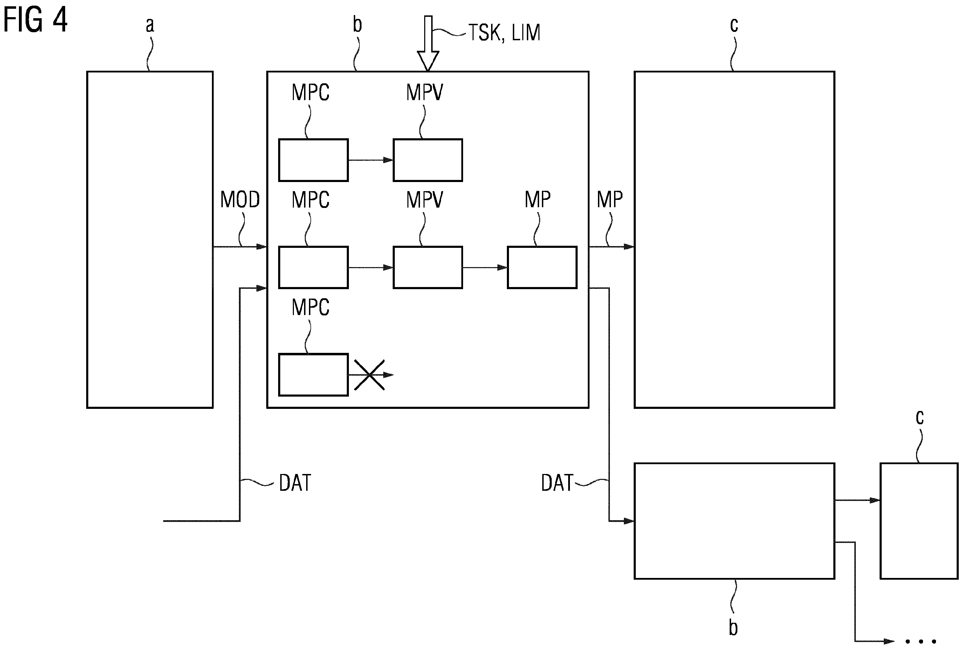

Figure 4 shows a schematic flow diagram for another embodiment of the inventive method, and some other aspects of the method step b) are illustrated. Here the preceding method step a) is shown explicitly, in which the thermal model MOD is provided for use in step b). Similar to the example of figure 3, a data set DAT with one or more current systems parameters is also provided as input for the method step b). After the first method step b), a subsequent method step c) is performed in which the movement plan MP which was determined in step b) is executed within the transport system. In the example of figure 4, step b) is carried out several times and each step b) is followed by a corresponding step c) in which the movement plan MP obtained from that step b) is executed. In other words, a plurality of movement plans MP is subsequently determined and executed by the transport system. Advantageously, the execution of a movement plan MP within a given step c) can overlap in time with the next step b) in which the next movement plan MP for the next time horizon is determined. As indicated by the dots, many such pairs of partially overlapping steps b) and c) can be executed.

In this embodiment, each step b) comprises a verification of a candidate movement plan by a thermal simulation similar to the example of figure 3. In figure 4, some other optional aspects are illustrated in the box corresponding to the first incidence of step b). In this example, a plurality of candidate movement plans MPC is proposed. Each candidate movement plan MPC is generated by the motion planner unit 50, in light of the predefined movement task TSK. For each of these candidate movement plans MPC a simulation is performed by the simulation unit 60. If the at least one predefined temperature limit LIM is respected within the simulation, a verified movement plan MPV is obtained. If the predefined temperature limit LIM is not respected, the candidate movement plan MPC is disregarded as indicated by the crossed-out arrow. Then a selection is made between the verified movement plans MPV, in case a plurality of candidate movement plans MPC has previously been verified by the simulation. This selection can also at least in part be based on the simulation results, in particular on the temperature distribution DIST obtained from the thermal simulation. The selection can in principle be based on a plurality of criteria, for example a thermal criterion such as minimizing a temperature within the motor(s) and a further criterion such as maximizing a throughput of transported elements through the transport system. In any case and independent of the selection criteria, the selected movement plan MP then becomes executed by the transport system in the corresponding subsequent step c).

In principle, it is sufficient that within each method step b) one candidate movement plan MPC is proposed and then verified by the simulation. If a plurality of such candidate movement plans MPC is proposed, this can happen either in parallel as indicated in figure 4 or within a loop based on the preceding simulation result, as indicated in figure 3. Many variations are possible here regarding the number and sequence of the sub steps of step b). In the context of the present invention it is only essential that the final movement plan MP which is determined for execution has been verified by an individual thermal simulation of this movement plan.

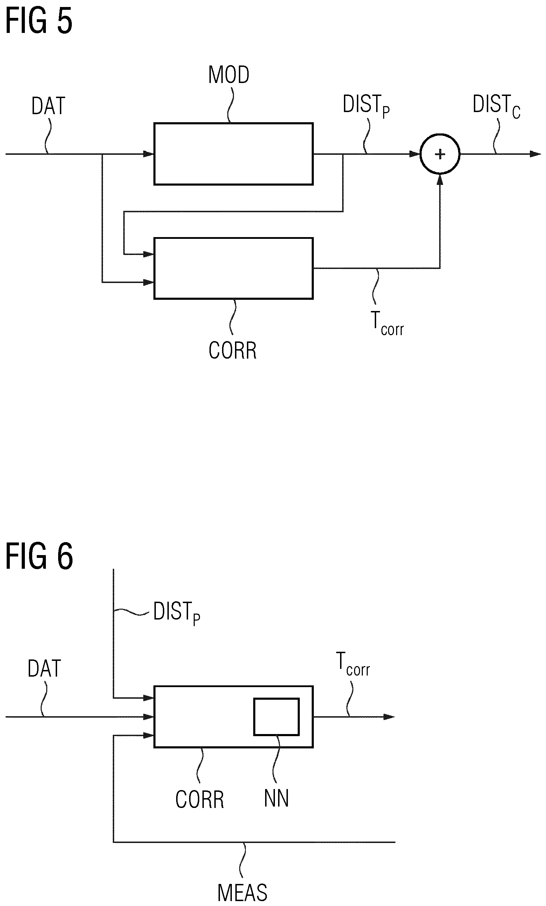

Figure 5 shows a schematic flow chart of some other aspects of step b) according to a further embodiment of the invention. Figure 5 only shows a selected part of the dataflow within step b), in particular concerning the sub step of performing the thermal simulation for a candidate movement plan MPC and deriving a corresponding simulated temperature distribution. In this embodiment, the simulation comprises two subsequent steps: in a first step, a preliminary temperature distribution DIST_{P} is obtained based on the thermal model MOD provided in step a), using the current systems parameters DAT as input. The thermal model MOD can for example be a simple physical model, such that a preliminary temperature distribution DIST_{P} can be obtained with relatively low computational effort. The preliminary temperature distribution DIST_{P} is then passed to a temperature correction module CORR, which serves to correct the preliminary temperature distribution DIST_{P} by deriving a correction term T_{corr}. When this correction term T_{corr} is applied (for example added) to the preliminary temperature distribution DIST_{P}, a corrected temperature distribution DIST_{C} is obtained.

The temperature correction module CORR can in particular use one or more physical measurements from the operation of the transport system as input. This can for example be the measurement of a temperature within the motor(s) 10 during operation and/or a measurement of an external physical parameter in the environment of the motor(s) 10. In particular, the temperature correction module CORR can continuously or sporadically be adapted according to such real physical measurements. Thereby the quality of the predicted temperature distribution DIST can be significantly improved, and effects of external parameters such as an ambient temperature, a fan or a radiation source can indirectly influence the simulation result through the applied correction term even though these external parameters may not be explicitly contained in the thermal model MOD on which the first step of the simulation is based.

The temperature correction module CORR can for example be an AI based module. This particular embodiment is illustrated further in figure 6 with a focus on the correction module CORR. It contains an artificial neural network NN which has been trained to provide a suitable temperature correction term T_{corr} based on measurement data MEAS from a previous operation of the transport system 1, as described above. The training of such a neural network can for example be performed within the controller 40 of the transport system. More favorably however, it can be performed on a separate computing device (a so-called training unit 70), particularly with a higher computing performance, and the neural network can be deployed from the separate computing device 70 to the controller 40 after the training. Such training based on real measurement data MEAS can be performed repeatedly during the operation of the transport system 1, for example allowing regular or irregular updates of the temperature correction module CORR which further improve the accuracy of the predicted temperature distributions DIST. By improving the accuracy of the simulation, a continuous improvement of the performance of the transport system can be achieved because over time more and more suitable movement plans will be determined for execution.

It is to be noted that independent of the grammatical term usage within the above description, individuals with male, female or other gender identities are included within the term.

### Reference Numerals

- 1: transport system
- 10: linear motor
- 20: stator (rail segment)
- 21: stator winding
- 22: stator housing
- 23: pedestal
- 30: mover
- 31: permanent magnet
- 32: mounting hole
- 33: transported element
- 40: controller
- 50: motion planner unit
- 60: simulation unit
- 70: training unit
- a: providing a thermal model MOD
- b: determining the movement plan MP
- c: executing the movement plan MP
- CORR: temperature correction module
- DAT: current systems data
- DIST: temperature distribution
- DIST_{C}: corrected temperature distribution
- DIST_{P}: preliminary temperature distribution
- LIM: predetermined temperature limit
- MEAS: measurement
- MOD: thermal model
- MPC: candidate movement plan
- MP: (selected/determined) movement plan
- MPV: verified movement plan
- NN: neural network
- TSK: movement task
- T_{corr}: correction term
- x: transport direction

## Claims

1. A method for controlling a transport system (1), the transport system (1) comprising at least one linear and/or planar motor (10) with a stator (20) and at least one mover (30) and a controller (40) for automatically controlling the movement of the at least one mover (30) relative to the stator (20),
- wherein the method comprises the following steps:
a) providing a thermal model (MOD) for the transport system (1),
b) determining a movement plan (MP) for the at least one mover (30) according to a predefined movement task (TSK), wherein a simulation of a temperature distribution (DIST) within the at least one linear and/or planar motor (10) during the movement is carried out based on the thermal model (MOD),
such that a movement plan (MP) is derived for which at least one predefined temperature limit (LIM) is respected within the simulation, and
c) executing the determined movement plan (MP) on the transport system (1) by means of the controller (40).

2. The method according to claim 1, wherein steps b) and c) are each carried out several times, such that a plurality of consecutive movement plans (MP) is determined and executed, wherein during the determination of each movement plan (MP), at least one simulation of the temperature distribution (DIST) within the at least one linear and/or planar motor (10) is carried out,
in particular wherein the simulation of each of the following movement plans (MP) uses the temperature distribution (DIST) obtained for the preceding movement plan (MP) as input.

3. The method according to claim 1 or 2, wherein in step b) one or more candidates (MPC) for the movement plan and are generated and then a verification and/or selection of one such candidate is carried out based on the simulation, thereby determining a movement plan (MP) for use in step c).

4. The method according to claim 3, wherein in step b) the one or more candidates (MPC) for the movement plan are generated by using a mathematical optimization method and/or a heuristic method.

5. The method according to any of the preceding claims, wherein the thermal model (MOD) comprises a physical model of the at least one linear and/or planar motor (10), in particular a lumped heat capacitance model of the at least one linear and/or planar motor (10).

6. The method according to any of the preceding claims, wherein the simulation within step b) uses a temperature correction module (CORR), in particular a temperature correction module (CORR) based on at least one artificial neural network (NN), wherein the temperature correction module (CORR) serves to correct the simulated temperature distribution (DIST) obtained from the thermal model (MOD).

7. The method according to claim 6, comprising the additional step:
d) adapting the temperature correction module (CORR) based on at least one physical measurement (MEAS) carried out during the operation of the transport system (1).

8. The method according to claim 7, wherein the at least one physical measurement (MEAS) is a temperature measurement within the at least one motor (10) and/or a measurement of an external physical parameter in the environment of the at least one motor (10).

9. The method according to one of claims 6 to 8, wherein the temperature correction module (CORR) is based on at least one artificial neural network (NN),
wherein the artificial neural network (NN) is being trained with data obtained from the operation of the transport system (1) .

10. The method according to claim 9, wherein the artificial neural network (NN) is being trained on a computing device separate from the controller (40).

11. The method according to one of the preceding claims, wherein in step b) the determination of the movement plan (MP) is based on the minimization of a temperature within the at least one motor (10) and at least one further criterion.

12. The method according to one of the preceding claims, wherein the transport system (1) comprises one or more movers (30), wherein each mover (30) functions as a carrier for a transported element (33).

13. A computer program product with program code, which is stored in machine-readable form on a carrier, for carrying out a method according to one of the preceding claims when the program code is executed on a computer.

14. A controller (40) for controlling the movement in a transport system (1), the transport system (1) comprising at least one linear and/or planar motor (10) with a stator (20) and at least one mover (30),
wherein the controller (40) is configured to carry out the method according to one of the claim 1 to 13.

15. A transport system (1) comprising at least one linear and/or planar motor (10) with a stator (20) and at least one mover (30) and a controller (40) for automatically controlling the movement of the at least one mover (30) relative to the stator (20), wherein the controller (40) is configured to carry out the method according to one of the claim 1 to 13.
